# FASCICULE DE BREVET EUROPEEN

(11) **EP 4 486 654 B1**
(45) Date de publication et mention de la délivrance du brevet: **24.09.2025**
(21) Numéro de dépôt: 23708527.9
(22) Date de dépôt: 20.02.2023
(51) Int. Cl.: B64F 5/60, G01M 3/32, B64D 45/00, B64D 47/00

(54) **PROCÉDÉ DE CONTRÔLE D'UN RÉSERVOIR D'OXYGÈNE POUR AÉRONEF**
VERFAHREN ZUR STEUERUNG EINES SAUERSTOFFTANKS FÜR EIN FLUGZEUG
METHOD FOR CONTROLLING AN OXYGEN TANK FOR AN AIRCRAFT

(30) Priorité: 28.02.2022 FR 2201757
(43) Date de publication de la demande: 08.01.2025
(73) Titulaire: SAFRAN AEROTECHNICS, 78370 Plaisir (FR)
(72) Inventeur: GRETER, Vincent, 77550 MOISSY-CRAMAYEL (FR)
(74) Mandataire: Ernest Gutmann - Yves Plasseraud S.A.S.
(86) Numéro de dépôt international: PCT/FR2023/050235
(87) Numéro de publication internationale: WO 2023/161578

(56) Documents cités:
- CN-A- 110 530 586
- CN-B- 111 721 480
- US-A1- 2013 179 028

## Description

### Domaine technique de l'invention

L'invention concerne un procédé de contrôle d'un réservoir d'oxygène pour un aéronef.

### Etat de la technique antérieure

Les systèmes embarqués de distribution d'oxygène pour des aéronefs civils peuvent fonctionner avec des réservoirs pressurisés contenant le dioxygène sous forme gazeuse, ou bien, sur certains grands appareils avec un stockage de plusieurs composés chimiques propres à former du dioxygène sur demande, en réagissant entre eux.

On désigne par la suite le dioxygène gazeux par le terme oxygène, pour simplifier.

Pour les systèmes à réservoir pressurisé, un suivi de la quantité d'oxygène dans le réservoir est mis en œuvre grâce à des capteurs de température et de pression pilotés par l'informatique de bord de l'aéronef. Le volume d'oxygène restant est généralement affiché au pilote, et peut de plus être intégré dans des algorithmes de maintenance de l'aéronef dans le cas de systèmes modernes.

Le niveau d'oxygène restant est généralement classifié parmi trois états possibles : plein à la pression nominale (typiquement après le remplissage), suffisant (supérieur à un niveau minimal pour la mission), et insuffisant (nécessitant un remplissage avant la mission suivante). Un quatrième niveau peut exister, signalant qu'un remplissage va être bientôt requis, ce qui permet de choisir une opportunité de remplissage moins contraignante sans attendre le dernier moment.

En cas de fuite du réservoir, un tel système de suivi du volume d'oxygène ne fait que signaler un besoin de remplissage une fois que la quantité d'oxygène a fortement baissé, plaçant le réservoir dans un état « insuffisant ». La détection de la fuite n'est possible que par l'expérience de l'opérateur qui remarque une baisse trop rapide de la quantité d'oxygène ou bien des remplissages trop fréquents, ou alors directement au cours d'opérations de contrôle et de maintenance, périodiques mais peu fréquentes.

De plus, les fuites sont généralement des problèmes qui apparaissent progressivement et s'aggravent dans le temps, par exemple à cause d'une fixation qui se desserre, d'un joint vieillissant ou d'une fissure qui se propage. Les fuites ne sont alors détectées que tard, lorsque les dégâts sont importants.

La détection de la fuite peut donc prendre beaucoup de temps, notamment plusieurs cycles de remplissage du réservoir et occasionner des pertes importantes, ainsi que des délais et retards ou annulation de mission.

Dans l'état de l'art, les documents US 2013/179028 A1, CN 111 721 480 B et CN 110 530 586 A divulguent des procédés de détection de fuites d'oxygène dans un aéronef à partir de mesures de pression dans le réservoir d'oxygène.

### Présentation de l'invention

L'invention vise à remédier à ces inconvénients, en proposant une méthode de détection anticipée des fuites dans le réservoir, avant que leur état ne s'aggrave notablement.

A cet effet, l'invention a pour objet un procédé de contrôle d'un réservoir d'oxygène pour aéronef, mis en œuvre par un calculateur embarqué de l'aéronef, le procédé comprenant les étapes suivantes :
- mesure périodique d'une valeur courante d'un volume d'oxygène dans le réservoir et enregistrement de la valeur courante dans une base de données,
- calcul d'un débit moyen de consommation d'oxygène pendant une période d'observation à partir des valeurs courantes enregistrées dans la base de données,
- comparaison dudit débit moyen avec une limite de débit moyen prédéterminée,
- détection d'un éventuel état de consommation active d'oxygène depuis le réservoir pendant la période d'observation, et
- signalement d'une fuite dans le réservoir, si le débit moyen de consommation d'oxygène est supérieur à ladite limite de débit moyen prédéterminée et si aucun état de consommation active n'a été détecté pendant la période d'observation.

Un tel procédé permet de détecter l'apparition d'une fuite dans le réservoir de manière prématurée et de la signaler au personnel pour la réparer avant qu'elle ne s'aggrave.

La limite de débit moyen peut notamment varier en fonction de la longueur de la période d'observation et des dimensions du réservoir et du système de distribution d'oxygène.

L'état de consommation active correspond à une fonction de l'aéronef entraînant une consommation notable d'oxygène depuis le réservoir. Il peut par exemple s'agir d'un test fonctionnel avant vol (appelé « Press To Test » ou « PTT »), qui engendre une consommation de quelques litres (environ 1 à 5 litres par station pilote) sur un temps très court (moins d'une minute).

Il peut aussi s'agir d'une utilisation du système pendant le vol (soit en port préventif, soit en utilisation d'urgence suite à un évènement). Une telle utilisation engendre une consommation de quelques litres par minute sur toute la durée de l'utilisation du système, qui peut s'étendre à plusieurs heures.

Le procédé permet ainsi de distinguer une consommation normale due à l'utilisation active du système d'une consommation anormale due à une fuite que l'on cherche à identifier.

Le procédé peut comprendre, après une mise hors-tension et une remise sous tension du calculateur embarqué, une étape de calcul de valeurs du volume d'oxygène dans le réservoir n'ayant pas été mesurées entre la mise hors tension et la remise sous tension, à partir d'une dernière valeur mesurée avant la mise hors-tension et d'une première valeur mesurée après la remise sous tension.

Une telle caractéristique permet de compléter la ou les valeurs manquantes, entre l'instant de mise hors tension et l'instant de remise sous-tension, pour permettre de poursuivre l'observation du volume malgré l'interruption lorsque ladite interruption dépasse la durée séparant deux mesures de volumes successives.

Les valeurs obtenues par ce calcul d'interpolation peuvent être employées pour calculer les débits moyens et courts.

L'interpolation peut par exemple être mise en œuvre selon une fonction affine.

Le procédé peut comprendre des étapes de :
- calcul d'un débit court à partir d'une différence entre la valeur courante et une valeur immédiatement précédente, et
- enregistrement du débit court dans la base de données,
l'étape de détection d'un éventuel état de consommation active d'oxygène depuis le réservoir se basant sur les débits courts enregistrés dans la base de données.

Une telle caractéristique permet de détecter les états de consommation active à partir de valeurs caractéristiques des débits de consommation mis en jeu, dans le calculateur embarqué.

La valeur de débit court peut être comparée à une limite de débit court prédéterminée, et une fuite peut être signalée si la valeur de débit court dépasse ladite limite de débit court.

Cela permet de détecter des fuites importantes et soudaines le plus rapidement possible.

La limite de débit court prédéterminée peut être supérieure ou égale à 2 litres par minute. Une telle valeur de débit, en l'absence d'utilisation active du système d'oxygène, est généralement caractéristique d'une consommation anormale due à une fuite.

Le procédé peut comprendre les étapes suivantes :
- mesure d'une température dans le réservoir, ou au voisinage du réservoir, simultanément à chaque mesure de volume d'oxygène dans le réservoir, et
- pour chaque débit moyen calculé, calcul d'une variation de la température pendant la même période d'observation, et comparaison de la variation de température à une limite de température prédéterminée,
dans lequel une fuite n'est signalée que si la variation de température est inférieure à la limite de température prédéterminée.

Lorsque la température n'est pas directement mesurée dans le réservoir, au contact de l'oxygène, mais dans son voisinage, il faut prendre en compte l'inertie thermique, qui engendre un délai entre la température réelle du gaz et la température mesurée. Le procédé utilise alors une limite de température plus large, afin d'avoir une tolérance plus importante.

Une telle caractéristique permet de discriminer les variations de volume importantes dues à une fuite de celles dues à un biais de mesure de température, lors d'un changement rapide de température du gaz dans l'environnement du réservoir.

La limite de température est par exemple inférieure ou égale à 2°C par heure.

Le procédé peut comprendre une étape de réinitialisation lorsqu'un état de consommation active ou un remplissage du réservoir d'oxygène est détecté.

Une telle détection peut correspondre à une variation de volume dans le réservoir supérieure à 10% d'une capacité maximale du réservoir, par exemple.

Une telle caractéristique permet de reprendre la détection de fuite rapidement sans que les résultats soient brouillés par les variations dues au test.

La limite de débit moyen prédéterminée peut diminuer lorsque la durée de la période d'observation augmente.

Cela permet d'obtenir des estimations de plus en plus fines au fur et à mesure que la période d'analyse est longue.

Ainsi, la limite de débit moyen peut être sensiblement égale à 2 L/min pour une période d'observation d'une heure, et de l'ordre de 100 mL/min pour une période d'observation supérieure à six heures.

Le procédé peut avantageusement comprendre une étape de détection d'un appui sur roues de l'aéronef et d'ajustement de la limite de débit court, ainsi que, le cas échéant, de la limite moyenne et/ou de la limite de température en fonction de l'appui sur roues mesuré.

Une telle caractéristique permet d'ajuster les valeurs limites utilisées pour la détection de fuite en fonction de la phase de vol en cours de l'aéronef, en l'air ou au sol.

Ces caractéristiques peuvent être librement combinées entre elles et contribuent à affiner la détection de fuites dans le réservoir et à discriminer des phénomènes pouvant conduire à des détections erronées.

### Brève description des figures

[Fig. 1] la figure 1 est une vue schématique de côté d'un aéronef équipé d'un réservoir d'oxygène,
[Fig. 2] la figure 2 est une représentation d'étapes de calcul de débits d'un procédé selon l'invention de contrôle du réservoir d'oxygène de la figure 1,
[Fig. 3] la figure 3 est une représentation des étapes de détection de fuite du procédé de la figure 2, et
[Fig. 4] la figure 4 est une représentation graphique d'une correction en cas d'arrêt temporaire du procédé de contrôle.

### Description détaillée de l'invention

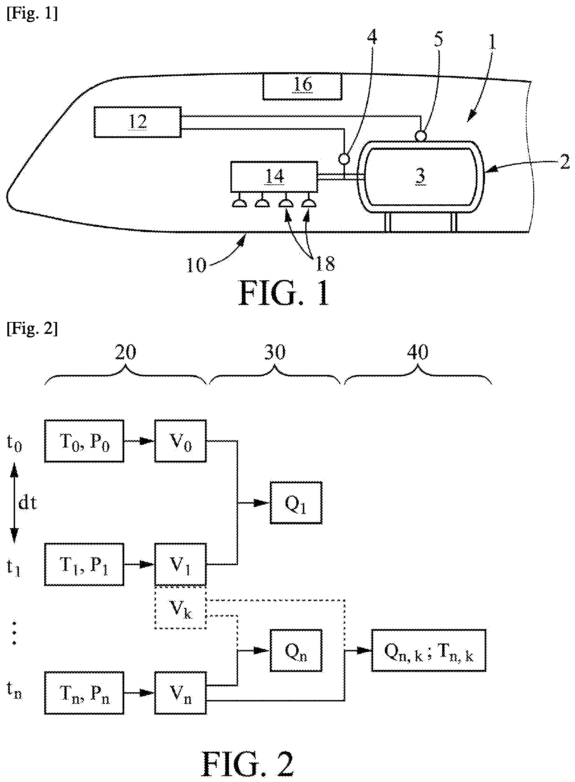

Un procédé de contrôle d'un réservoir d'oxygène 1 pressurisé embarqué dans un aéronef 10 est décrit ci-dessous, en référence aux figures 1 et 2.

Le réservoir d'oxygène 1 est par exemple un réservoir comprenant une paroi 2 métallique définissant un espace interne 3 contenant du dioxygène pressurisé sous forme gazeuse. L'aéronef 10 est par exemple un avion, notamment un avion de ligne, ou bien un hélicoptère. L'aéronef 10 comprend un calculateur embarqué 12, et un système de distribution d'oxygène 14 piloté par ledit calculateur embarqué 12 et relié au réservoir 1.

Le système de distribution d'oxygène 14 est par exemple adapté pour distribuer de l'oxygène aux occupants depuis le réservoir 1 en cas de défaillance d'un système de pressurisation principal 16 de l'aéronef 10, à travers des masques 18, de manière connue.

Le calculateur embarqué 12 est également configurée pour mettre en œuvre le procédé de contrôle du réservoir 1 selon l'invention.

A cette fin, le réservoir 1 est muni de moyens de mesure d'un volume d'oxygène contenu dans le réservoir, connectés au calculateur embarqué 12. Les moyens de mesure comprennent par exemple au moins un capteur de pression 4, propre à mesurer une pression de gaz dans le volume interne 3 du réservoir 1, et au moins un capteur de température 5.

Le capteur de température 5 peut être placé directement dans le volume interne 3 du réservoir 1, et est alors adapté pour mesurer directement une température du gaz dans le réservoir 1, ou bien à l'extérieur et au voisinage du réservoir 1, par exemple contre la paroi 2.

La mesure de température peut alors comporter un biais compte-tenu de l'inertie thermique du gaz à l'intérieur du réservoir 1.

Le calculateur embarqué 12 est configuré pour déduire le volume d'oxygène contenu dans le réservoir 1 à partir des valeurs de pression et de température mesurées, et contient une base de données dans laquelle enregistrer les valeurs mesurées.

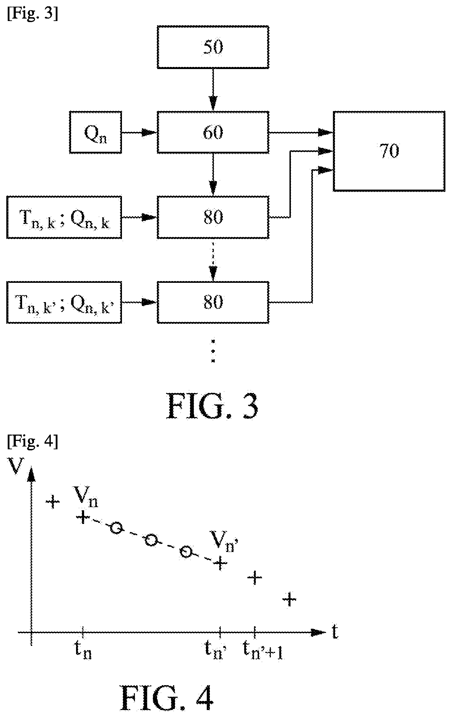

Le procédé, représenté schématiquement sur les figures 2 et 3, comprend une étape de mesure 20 périodique du volume d'oxygène contenu dans le réservoir 1, mise en œuvre par le calculateur embarqué 12 au moyen des moyens de mesure.

Le procédé comprend également une étape de mesure 25 d'une température Tₙ dans le réservoir 1, ou au voisinage du réservoir 1, pour chaque mesure 20 de volume Vₙ d'oxygène dans le réservoir 1.

Les mesures de température et de volume commencent au lancement du procédé, par exemple lors de la mise sous tension du calculateur embarqué 12, et l'instant correspondant est noté t₀.

Les instants de mesure notés tₙ sont séparés d'une période dt, et une valeur de volume Vₙ est mesurée comme décrit plus haut, à chacun des instants tₙ.

Chaque valeur de volume Vₙ mesurée est enregistrée dans la base de données.

La période dt séparant deux mesures successives de volume est sensiblement constante, et est par exemple égale à 1 heure.

Le procédé comprend, à chaque étape de mesure 20 d'une valeur de volume Vₙ, une étape de détermination 30 d'un débit court Qₙ de consommation d'oxygène à l'instant tₙ, calculé à partir de la différence Vₙ-Vₙ₋₁. Le débit court Qₙ est donc un débit mesuré sur une unique période séparant deux mesures successives, et dépend également de la longueur de la période dt entre deux mesures.

Le procédé comprend également des étapes de détermination 40 d'au moins un débit moyen Q_{n,k}, chaque débit moyen étant calculé sur une période d'observation comprenant un nombre k de périodes, avec k supérieur à un.

Par exemple, un premier débit moyen Q_{n,k} sur k=2 périodes consécutives et un deuxième débit moyen Q_{n,k'} sur k'=5 périodes consécutives peuvent être calculés.

Pour chaque débit moyen Q_{n,k} calculé, le procédé comprend le calcul d'une variation de température T_{n,k} sur la période d'observation correspondante.

Le procédé comprend une étape de détection 50 d'un état de consommation active du système d'oxygène 14, afin de discriminer les situations de surconsommation normale des situations anormales.

La détection 50 de consommation active se base avantageusement sur les valeurs de débit court Qₙ enregistrées dans la base de données.

Si une consommation active est détectée, aucune fuite ne peut être détectée sur une période comprenant ladite consommation active.

Avantageusement, le procédé est alors réinitialisé après ladite consommation active.

Le procédé comprend alors une étape de comparaison 60 du débit court Qₙ avec une limite de débit court prédéterminée, afin de détecter une consommation anormale d'oxygène.

La limite de débit court est par exemple égale à 2 L/min (litres par minute, dans les conditions normales de température et de pression), ou supérieure.

Dans le cas où le débit mesuré est supérieur à la limite de débit court, et si aucun état de consommation active n'est détecté, la surconsommation est probablement due à une fuite, et le calculateur embarqué 12 signale cette fuite au personnel de bord au cours d'une étape de signalement 70.

Le procédé comprend alors une étape de comparaison 80 pour chaque débit moyen Q_{n,k} et Q_{n,k'} assocé à une période d'observation respective.

Le débit moyen Q_{n,k} est alors comparé à une limite de débit moyen distincte de la limite de débit court, et notamment plus faible, pour détecter une consommation anormale d'oxygène. La limite de débit moyen est par exemple inférieure à 1,5 L/min pour une période d'observation de deux heures.

La limite de débit moyen décroît avantageusement lorsque la durée de la période d'observation augmente.

Par exemple, pour une période d'observation supérieure à 6 heures, la limite de débit moyen peut être inférieure ou égale à 200 mL/min.

Avantageusement, chaque étape de comparaison 80 comprend une sous-étape de vérification des variations de températures sur la période d'observation. La variation de température T_{n,k} est comparée à une limite de température prédéterminée, et la fuite n'est signalée que si la variation de température T_{n,k} est inférieure à ladite limite de température prédéterminée. Dans le cas contraire, la variation de volume peut être liée à une dilatation thermique et non à une fuite.

Avantageusement, le procédé comprend une étape de mesure d'un appui sur roues de l'aéronef 10 et d'ajustement de la limite de débit moyen, ainsi que, le cas échéant, de la limite de température en fonction de l'appui sur roues mesuré.

Cela permet de distinguer si l'aéronef est au sol ou en vol, et d'ajuster les limites en conséquence.

Par exemple, pour un vol long de plus de 6 heures et ayant connu une bonne stabilité de la température ambiante (ce qui est généralement le cas au cours d'un vol), le procédé permet de discriminer des fuites de l'ordre de 0,1 L/min.

Enfin, comme représenté sur la figure 4, le procédé peut comprendre, en cas d'interruption temporaire des mesures, une étape d'interpolation des volumes mesurés.

Par exemple, si les mesures de volume sont interrompues entre les instants tₙ et t_{n'}, par exemple à cause d'une mise hors tension du calculateur embarqué 12, les mesures manquantes entre tₙ et t_{n'} (marquées par des cercles sur la figure 3) sont complétées par interpolation linéaire entre la dernière valeur mesurée avant tₙ et la première valeur mesurée après t_{n'}.

Ainsi, un comportement anormal peut être détecté au plus vite, même en cas de mise hors-tension temporaire du calculateur embarqué.

Lorsqu'un test de mise en pression du système de distribution d'oxygène 14 est détecté, le procédé est réinitialisé à la fin dudit test en réeffectuant une première mesure de volume V₀ à un nouvel instant t₀.

Ainsi, la consommation importante d'oxygène au cours du test ne perturbe pas le procédé de détection de fuite.

## Revendications

1. Procédé de contrôle d'un réservoir (1) d'oxygène pour aéronef (10), mis en œuvre par un calculateur embarqué (12) de l'aéronef (10), le procédé comprenant les étapes suivantes :
- mesure (20) périodique d'une valeur courante (Vₙ) d'un volume d'oxygène dans le réservoir (1) et enregistrement de la valeur courante (Vₙ) dans une base de données,
- calcul (40) d'un débit moyen (Q_{n,k}) de consommation d'oxygène pendant la période d'observation à partir des valeurs courantes (Vₙ) enregistrées dans la base de données,
- comparaison (80) dudit débit moyen (Q_{n,k}) avec une limite de débit moyen prédéterminée,
- détection d'un éventuel état de consommation active d'oxygène depuis le réservoir (1) pendant la période d'observation, et
- signalement (70) d'une fuite dans le réservoir, si le débit moyen (Q_{n,k}) de consommation d'oxygène est supérieur à ladite limite de débit moyen prédéterminée et si aucun état de consommation active n'a été détecté pendant la période d'observation.

2. Procédé selon la revendication précédente, dans lequel le procédé comprend, après une mise hors-tension et une remise sous tension du calculateur embarqué (12), une étape de calcul de valeurs du volume d'oxygène dans le réservoir (1) n'ayant pas été mesurées entre la mise hors tension et la remise sous tension, à partir d'une dernière valeur mesurée avant la mise hors-tension (Vₙ) et d'une première valeur mesurée après la remise sous tension (V_{n'}).

3. Procédé selon l'une de revendications précédentes, dans lequel le procédé comprend des étapes de :
- calcul (30) d'un débit court (Qₙ) à partir d'une différence entre la valeur courante (Vₙ) et une valeur immédiatement précédente (Vₙ₋₁), et
- enregistrement du débit court (Qₙ) dans la base de données,
l'étape de détection d'un éventuel état de consommation active d'oxygène depuis le réservoir se basant sur les débits court (Qₙ) enregistrés dans la base de données.

4. Procédé selon la revendication précédente, dans lequel chaque valeur de débit court (Qₙ) est comparée à une limite de débit court prédéterminée, et une fuite est signalée si la valeur de débit court (Qₙ) dépasse ladite limite de débit court.

5. Procédé selon l'une des revendications précédentes, dans lequel le procédé comprend les étapes suivantes :
- mesure d'une température (Tₙ) dans le réservoir (1), ou au voisinage du réservoir, simultanément à chaque mesure (20) de volume (Vₙ) d'oxygène dans le réservoir (1), et
- pour chaque débit moyen (Q_{n,k}) calculé, calcul d'une variation de la température (T_{n,k}) pendant la même période d'observation, et comparaison de la variation de température (T_{n,k}) à une limite de température prédéterminée,
dans lequel une fuite n'est signalée que si la variation de température (T_{n,k}) est inférieure à la limite de température prédéterminée.

6. Procédé selon l'une de revendications précédentes, dans lequel le procédé comprend une étape de réinitialisation lorsqu'un état de consommation active ou un remplissage du réservoir d'oxygène est détecté.

7. Procédé selon l'une de revendications précédentes, dans lequel la limite de débit moyen prédéterminée diminue lorsqu'une durée de la période d'observation augmente.

8. Procédé selon l'une de revendications précédentes, dans lequel le procédé comprend une étape de détection d'un appui sur roues de l'aéronef (10) et d'ajustement de la limite de débit moyen, ainsi que, le cas échéant, de la limite de température en fonction de l'appui sur roues mesuré.

## Patentansprüche

1. Verfahren zur Steuerung eines Sauerstofftanks (1) für ein Luftfahrzeug (10), das von einem Bordcomputer (12) des Luftfahrzeugs (10) durchgeführt wird, wobei das Verfahren die folgenden Schritte umfasst:
- periodisches Messen (20) eines aktuellen Werts (Vₙ) des Sauerstoffvolumens im Tank (1) und Hinterlegen des aktuellen Werts (Vₙ) in einer Datenbank,
- Berechnen (40) einer durchschnittlichen Durchflussrate (Q_{n,k}) des Sauerstoffverbrauchs während des Beobachtungszeitraums aus den in der Datenbank hinterlegten aktuellen Werten (Vₙ),
- Vergleichen (80) dieser durchschnittlichen Durchflussrate (Q_{n,k}) mit einem vorgegebenen Grenzwert für die durchschnittliche Durchflussrate,
- Erkennen eines möglichen Zustands aktiven Sauerstoffverbrauchs aus dem Tank (1) während des Beobachtungszeitraums und
- Melden (70) eines Lecks im Tank, wenn die durchschnittliche Durchflussrate (Q_{n,k}) des Sauerstoffverbrauchs den vorgegebenen Grenzwert für die durchschnittliche Durchflussgrenzwert überschreitet und wenn während des Beobachtungszeitraums kein Zustand aktiven Verbrauchs erkannt wurde.

2. Verfahren nach dem vorhergehenden Anspruch,
wobei das Verfahren nach einem Ausschalten und Wiedereinschalten des Bordcomputers (12) einen Schritt des Berechnens von Werten des Sauerstoffvolumens in dem Tank (1) umfasst, die zwischen dem Ausschalten und Wiedereinschalten nicht gemessen wurden, und zwar ausgehend von einem vor dem Ausschalten zuletzt gemessenen Wert (Vₙ) und einem nach dem Wiedereinschalten zuerst gemessenen Wert (Vₙ).

3. Verfahren nach einem der vorhergehenden Ansprüche,
wobei das Verfahren die folgenden Schritte umfasst:
- Berechnen (30) einer Kurzzeit-Durchflussrate (Qₙ) aus einer Differenz zwischen dem aktuellen Wert (Vₙ) und einem unmittelbar vorhergehenden Wert (Vₙ₋ᵢ) und
- Hinterlegen der Kurzzeit-Durchflussrate (Qₙ) in der Datenbank,
wobei der Schritt des Erkennens eines möglichen Zustands aktiven Sauerstoffverbrauchs aus dem Tank auf den in der Datenbank hinterlegten Kurzzeit-Durchflussraten (Qₙ) basiert.

4. Verfahren nach dem vorhergehenden Anspruch,
wobei jeweils der Wert der Kurzzeit-Durchflussrate (Qₙ) mit einem vorgegebenen Grenzwert für die Kurzzeit-Durchflussrate verglichen wird und ein Leck gemeldet wird, wenn der Wert der Kurzzeit-Durchflussrate (Qₙ) diesen Grenzwert für die Kurzzeit-Durchflussrate überschreitet.

5. Verfahren nach einem der vorhergehenden Ansprüche,
wobei das Verfahren die folgenden Schritte umfasst:
- Messen einer Temperatur (Tₙ) im Tank (1) oder in der Nähe des Tanks gleichzeitig mit jeder Messung (20) des Sauerstoffvolumens (Vₙ) im Tank (1) und
- Berechnen einer Temperaturänderung (T_{n,k}) während desselben Beobachtungszeitraums für jede berechnete durchschnittliche Durchflussrate (Q_{n,k}) und Vergleichen der Temperaturänderung (T_{n,k}) mit einem vorgegebenen Temperaturgrenzwert,
wobei ein Leck nur dann gemeldet wird, wenn die Temperaturänderung (T_{n,k}) den vorgegebenen Temperaturgrenzwert unterschreitet.

6. Verfahren nach einem der vorhergehenden Ansprüche,
wobei das Verfahren bei Erkennen eines Zustand aktiven Verbrauchs oder einer Befüllung des Sauerstofftanks einen Rücksetzschritt umfasst.

7. Verfahren nach einem der vorhergehenden Ansprüche,
wobei der vorgegebene Grenzwert für die durchschnittliche Durchflussrate mit zunehmender Dauer des Beobachtungszeitraums sinkt.

8. Verfahren nach einem der vorhergehenden Ansprüche,
wobei das Verfahren einen Schritt des Erkennens von einem Radaufstand des Luftfahrzeugs (10) und des Einstellens von dem Grenzwert für die durchschnittliche Durchflussrate sowie gegebenenfalls von dem Temperaturgrenzwert in Abhängigkeit vom gemessenen Radaufstand umfasst.

## Claims

1. A method for controlling an oxygen tank (1) for aircraft (10), implemented by a processor (12) onboard the aircraft (10), where the method comprises the following steps:
- measuring (20) periodically a current value (Vₙ) of an oxygen volume in the tank (1) and saving the current value (Vₙ) in a database;
- calculating (40) an average oxygen consumption flow rate (Q_{n,k}) during an observation period from current values (Vₙ) stored in the database;
- comparing (80) said average flow rate (Q_{n,k}) with a preset average flow-rate limit;
- detecting a possible state of active oxygen consumption from the tank (1) during the observation period; and
- reporting (70) a leak in the tank, if the average oxygen consumption flow rate (Q_{n,k}) is over said preset average flow-rate limit and if no active consumption state was detected during the observation period.

2. The method according to the preceding claim wherein the method comprises, after powering down and restoring power to the onboard processor (12), a step of calculation of values of the oxygen volume in the tank (1) that were not measured between powering down and restoring power, using a final measured value before powering down (Vₙ) and a first measured value after restoring power (V_{n'}).

3. The method according to one of the preceding claims, wherein the method comprises steps of:
- calculating (30) a short-term flow rate (Qₙ) based on the difference between the current value (Vₙ) and an immediately preceding value (Vₙ₋₁); and
- recording the short-term flow rate (Qₙ) in the database;
where the step of detecting a possible state of active oxygen consumption from the tank is based on the short-term flow rates (Qₙ) recorded in the database.

4. The method according to the preceding claim, wherein each value of the short-term flow rate (Qₙ) is compared to a preset short-term flow-rate limit, and a leak may be reported if the short-term flow-rate value (Qₙ) exceeds said short-term flow-rate limit.

5. The methods according to one of the preceding claims, wherein the method comprises the following steps:
- measuring the temperature (Tₙ) in the tank (1), or in the neighborhood of the tank, simultaneously with each oxygen volume (Vₙ) measurement (20) in the tank (1); and
- calculating, for each calculated average flow rate (Q_{n,k}), a variation of the temperature (T_{n,k}) over the same observation period, and comparison of the temperature (T_{n,k}) variation to a preset temperature limit;
wherein a leak is only reported if the temperature (T_{n,k}) variation is below the preset temperature limit.

6. The method according to one of the preceding claims, wherein the method comprises a reinitializations step when an active consumption state or filling of the oxygen tank is detected.

7. The method according to one of the preceding claims wherein the preset average flow-rate limit decreases when the length of the observation period increases.

8. The method according to one of the preceding claims, wherein the method comprises a step of detection of a support force on the wheels of the aircraft (10) and adjustment of the average flow-rate limit, and, as applicable, of the temperature limit based on the measured support force on the wheels.
